# EUROPÄISCHE PATENTSCHRIFT

(11) **EP 4 223 398 B1**
(45) Veröffentlichungstag und Bekanntmachung des Hinweises auf die Patenterteilung: **03.07.2024**
(21) Anmeldenummer: 23150032.3
(22) Anmeldetag: 02.01.2023
(51) Int. Cl.: B01F 23/213, B01F 25/313, F01N 3/20, F01N 3/28, B01F 25/00

(54) **MISCHBAUGRUPPE FÜR EINE ABGASANLAGE EINER BRENNKRAFTMASCHINE**
MIXING ASSEMBLY FOR AN EXHAUST SYSTEM OF AN INTERNAL COMBUSTION ENGINE
MODULE DE MÉLANGE POUR UN SYSTÈME D'ÉCHAPPEMENT D'UN MOTEUR À COMBUSTION INTERNE

(30) Priorität: 04.02.2022 DE 102022102631
(43) Veröffentlichungstag der Anmeldung: 09.08.2023
(73) Patentinhaber: Purem GmbH, 66539 Neunkirchen (DE)
(72) Erfinder: Weinmann, Philipp, Esslingen (DE); Eder, Vincent, Kirchheim unter Teck (DE); Rothfuß, Mathias, Waiblingen (DE); Wolf, Tobias, Köngen (DE); Dentler, Michael, Reichenbach (DE); Kauderer, Alexander, Kuchen (DE)
(74) Vertreter: Ruttensperger Lachnit Trossin Gomoll

(56) Entgegenhaltungen:
- EP-A1- 2 732 869
- WO-A1-2012/052690
- DE-A1-102018 204 903
- DE-A1-102020 109 022

## Beschreibung

Die vorliegende Erfindung betrifft eine Mischbaugruppe für eine Abgasanlage einer Brennkraftmaschine zum Mischen von von der Brennkraftmaschine abgegebenem Abgas mit Reaktionsmittel.

Aus der DE 10 2020 109 022 A1 ist eine Mischbaugruppe für eine Abgasanlage einer Brennkraftmaschine, bei welcher ein Kern-Strömungskanal von einem einen Mantel-Strömungskanal bereitstellenden Bypass-Strömungskanal im Wesentlichen konzentrisch umgeben ist. Eine Reaktionsmittelabgabeanordnung umfasst einen Injektor und einen auf den Injektor folgenden, radial sich erweiternden Mischer. Ein Teil eines in den Kern-Strömungskanal eingeleiteten ersten Teil-Abgasstroms tritt in das Innenvolumen des Mischers ein und strömt zusammen mit dem in dieses Innenvolumen auch eingespritzten Reaktionsmittel in den Kern-Strömungskanal, so dass im Wesentlichen kein Reaktionsmittel in den in den Mantel-Strömungskanal eingeleiteten zweiten Teil-Abgasstrom gelangt. Der Kern-Strömungskanal und der Mantel-Strömungskanal weisen in Richtung einer Mischstrecken-Längsachse, also einer Richtung, in welcher im Wesentlichen Abgas in einem jeweiligen Strömungskanal strömt, jeweils einen im Wesentlichen konstanten Strömungsquerschnitt auf.

Eine weitere Mischbaugruppe ist aus der EP 2 732 869 A1 bekannt. In einen den Kern-Strömungskanal der Mischbaugruppe durchströmenden Abgas-Teilstrom wird ein Reaktionsmittel eingespritzt. Der den Mantel-Strömungskanal durchströmende Abgas-Teilstrom tritt durch Öffnungen in einer den Mantel-Strömungskanal an seinem stromaufwärtigen Ende begrenzenden Ringwand in den Mantel-Strömungskanal ein und verlässt den Mantel-Strömungskanal durch Öffnungen in einer den Mantel-Strömungskanal an seinem stromabwärtigen Ende begrenzenden Ringwand.

Die DE 10 2018 204 903 A1 offenbart mit dem Ausführungsbeispiel der Abbildung 5 eine Mischbaugruppe entsprechend dem Oberbegriff des Anspruchs 1.

Es ist die Aufgabe der vorliegenden Erfindung, eine Mischbaugruppe für eine Abgasanlage für eine Brennkraftmaschine vorzusehen, welche bei baulich einfacher Ausgestaltung eine einfache Anpassung an verschiedene Einbauumgebungen ermöglicht.

Erfindungsgemäß wird diese Aufgabe gelöst durch eine Mischbaugruppe für eine Abgasanlage einer Brennkraftmaschine zum Mischen von von einer Brennkraftmaschine abgegebenem Abgas mit Reaktionsmittel gemäß Anspruch 1, umfassend eine in Richtung einer Mischstrecken-Längsachse sich erstreckende Mischstrecke mit einem stromaufwärtigen Mischstrecken-Einströmbereich zur Aufnahme von Abgas und/oder Reaktionsmittel in der Mischstrecke, wobei die Mischstrecke einen von einem ersten Abgas-Teilstrom durchströmbaren Kern-Strömungskanal und einen von einem zweiten Abgas-Teilstrom durchströmbaren Bypass-Strömungskanal umfasst. In dem Bypass-Strömungskanal ist wenigstens ein einen Strömungsquerschnitt des Bypass-Strömungskanals verringerndes Strömungsverdämmungselement angeordnet.

Durch das Vorsehen zumindest eines Strömungsverdämmungselements in dem Bypass-Strömungskanal besteht die Möglichkeit, den Strömungswiderstand und damit auch den Massenstrom des den Bypass-Strömungskanal durchströmenden Abgases zu beeinflussen, ohne dass dadurch eine bauliche Änderung von die verschiedenen Strömungskanäle definierenden Komponenten erforderlich ist. Dadurch kann die Aufteilung des gesamten Abgasstroms auf die beiden Abgas-Teilströme auch angepasst an eine Abgasanlage bzw. eine Brennkraftmaschine, bei welcher eine derartige Mischbaugruppe eingesetzt wird, lediglich durch die Auswahl der Formgebung bzw. Dimensionierung eines derartigen Strömungsverdämmungselements beeinflusst werden. Somit kann der Gegendruck der gesamten Abgasanlage optimal an die Einsatzumgebung angepasst werden, und es kann eine optimale Durchmischung von Abgas und Reaktionsmittel in der Mischstrecke bzw. stromaufwärts einer Abgasbehandlungseinheit, wie zum Beispiel SCR-Katalysator, erreicht werden.

Um vermittels des Bypass-Strömungskanals eine effiziente thermische Abschirmung des Mantel-Strömungskanals erreichen zu können, umfasst der Bypass-Strömungskanal einen den Kern-Strömungskanal ringartig umgebenden Mantel-Strömungskanal, und wenigstens ein Strömungsverdämmungselement umfasst einen in dem Mantel-Strömungskanal angeordneten Strömungsverdämmungsring.

Eine im Wesentlichen gleichmäßige Verdämmung im Mantel-Strömungskanal über den ganzen Umfang desselben kann beispielsweise dadurch erreicht werden, dass der Strömungsverdämmungsring die Mischstrecken-Längsachse vollständig umgibt und somit beispielsweise einen geschlossenen Ring bildet.

Die Mischstrecke umfasst ein den Mantel-Strömungskanal nach radial außen begrenzendes äußeres Mischstreckengehäuse und ein den Kern-Strömungskanal nach radial außen begrenzendes und von dem Mantel-Strömungskanal trennendes inneres Mischstreckengehäuse. Dabei ist wenigstens ein Strömungsverdämmungselement an einer dem Mantel-Strömungskanal zugewandten Innenseite des äußeren Mischstreckengehäuses festgelegt, so dass zwischen dem Strömungsverdämmungselement und einer dem Mantel-Strömungskanal zugewandten Außenseite des inneren Mischstreckengehäuses ein Durchströmbereich mit bezüglich eines Strömungsquerschnitts des Mantel-Strömungskanals stromaufwärts des wenigstens einen Strömungsverdämmungselements und bezüglich eines Strömungsquerschnitts des Mantel-Strömungskanals stromabwärts des wenigstens einen Strömungsverdämmungselements verringertem Strömungsquerschnitt gebildet ist. Zusätzlich ist wenigstens ein Strömungsverdämmungselement an der dem Mantel-Strömungskanal zugewandten Außenseite des inneren Mischstreckengehäuses festgelegt, so dass zwischen dem Strömungsverdämmungselement und der dem Mantel-Strömungskanal zugewandten Innenseite des äußeren Mischstreckengehäuses ein Durchströmbereich mit bezüglich des Strömungsquerschnitts des Mantel-Strömungskanals stromaufwärts des wenigstens einen Strömungsverdämmungselements und bezüglich des Strömungsquerschnitts des Mantel-Strömungskanals stromabwärts des wenigstens einen Strömungsverdämmungselements verringertem Strömungsquerschnitt gebildet ist.

Für eine stabile Anbindung eines derartigen Strömungsverdämmungsrings kann dieser einen Ringkörper mit L-förmigem Querschnittsprofil aufweisen, wobei ein erster L-Schenkel des Ringkörpers an der Innenseite des äußeren Mischstreckengehäuses festgelegt ist und ein vom ersten L-Schenkel sich weg erstreckender zweiter L-Schenkel radial in den Mantel-Strömungskanal hervorsteht und mit dem inneren Mischstreckengehäuse den Durchströmbereich begrenzt, oder wobei der erste L-Schenkel des Ringkörpers an der Außenseite des inneren Mischstreckengehäuses festgelegt ist und der vom ersten L-Schenkel sich weg erstreckende zweite L-Schenkel radial in den Mantel-Strömungskanal hervorsteht und mit dem äußeren Mischstreckengehäuse den Durchströmbereich begrenzt.

Eine gegen mechanische, thermische und chemische Einflüsse resistente Festlegung eines Strömungsverdämmungsrings an einem Mischstreckengehäuse kann beispielsweise dadurch erreicht werden, dass der Ringkörper mit seinem ersten L-Schenkel an dem äußeren Mischstreckengehäuse oder dem inneren Mischstreckengehäuse durch Kraftschluss oder/und Materialschluss, vorzugsweise Verschweißen, festgelegt ist.

Zur weiteren Beeinflussung des Strömungswiderstands sind wenigstens zwei Strömungsverdämmungselemente in Richtung der Mischstrecken-Längsachse aufeinanderfolgend alternierend am inneren Mischstreckengehäuse und am äußeren Mischstreckengehäuse festgelegt.

Um dabei einen mäanderartigen Strömungsweg zu erreichen, können wenigstens ein am inneren Mischstreckengehäuse festgelegtes Strömungsverdämmungselement und wenigstens ein am äußeren Mischstreckengehäuse festgelegtes Strömungsverdämmungselement einander radial überlappen.

Um im Bypass-Strömungskanal eine möglichst gleichmäßige Abgasströmung zu erreichen, wird vorgeschlagen, dass wenigstens ein Strömungsverdämmungselement im Bereich des Mischstrecken-Einströmbereichs angeordnet ist.

Zur Abgabe von Reaktionsmittel in die Mischstrecke kann eine Reaktionsmittelabgabeanordnung vorgesehen sein.

Dabei kann für eine verbesserte Durchmischung von Abgas und Reaktionsmittel die Reaktionsmittelabgabeanordnung einen Mischer umfassen, der beispielsweise in Richtung einer Reaktionsmittel-Hauptabgaberichtung sich radial erweiternd ausgebildet sein kann.

Um das Entstehen von Reaktionsmittelablagerungen im Bereich des Bypass-Strömungskanals zu vermeiden, wird vorgeschlagen, dass Reaktionsmittelabgabeanordnung zur Abgabe von Reaktionsmittel im Wesentlichen nur in den ersten Abgas-Teilstrom ausgebildet ist.

Die Erfindung betrifft ferner eine Abgasanlage entsprechend Anspruch 10.

Die Erfindung wird nachfolgend mit Bezug auf die beiliegenden Figuren detailliert beschrieben. Es zeigt:
- Fig. 1: in prinzipartiger Darstellung eine Mischbaugruppe für eine Abgasanlage einer Brennkraftmaschine;
- Fig. 2: einen Abschnitt eines inneren Mischstreckengehäuses der Mischstrecke der Fig. 1 mit einem an einer Außenseite desselben angeordneten Strömungsverdämmungsring;
- Fig. 3: in perspektivischer und teilweise transparenter Darstellung einen Teil der Mischstrecke der Fig. 1.

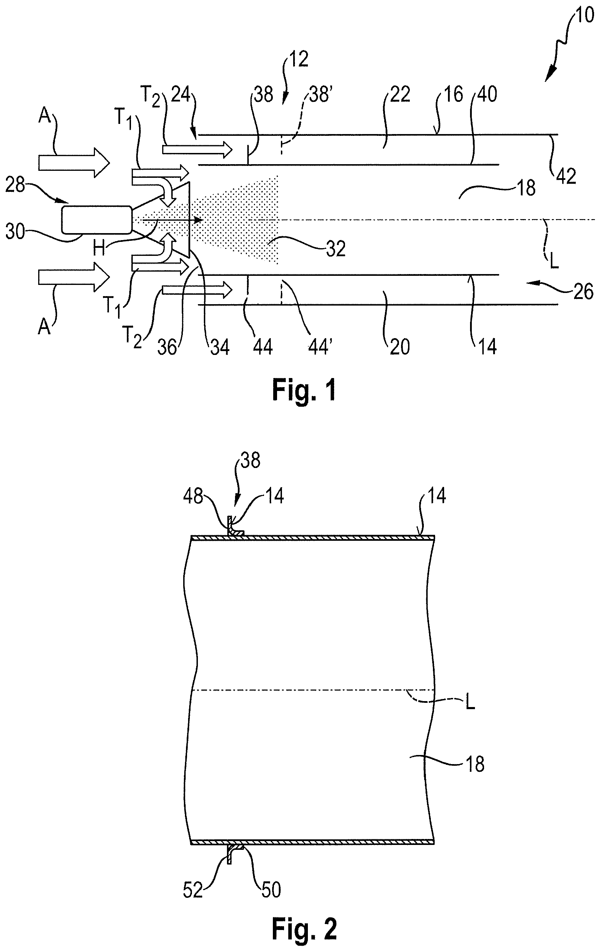

In Fig. 1 ist eine einen Teil einer allgemein mit 10 bezeichneten Abgasanlage für eine Brennkraftmaschine beispielsweise in einem Fahrzeug bereitstellende Mischstrecke mit 12 bezeichnet. Die Mischstrecke 12 umfasst ein beispielsweise rohrartig ausgebildetes und in Richtung einer Mischstrecken-Längsachse L langgestrecktes, im Wesentlichen zylindrisch ausgebildetes inneres Mischstreckengehäuse 14.

Bezüglich der Mischstrecken-Längsachse L ist das innere Mischstreckengehäuse 14 radial außen von einem beispielsweise ebenfalls rohrartig bzw. zylindrisch ausgebildetem äußeren Mischstreckengehäuse 16 umgeben. Das innere Mischstreckengehäuse 14 begrenzt einen Kern-Strömungskanal 18 der Mischstrecke 12 nach radial außen. Ein den Kernströmungskanal 18 im dargestellten Ausgestaltungsbeispiel im Wesentlichen konzentrisch umgebender und einen Bypass-Strömungskanal 20 bereitstellender Mantel-Strömungskanal 22 ist durch das innere Mischstreckengehäuse 14 nach radial innen und das äußere Mischstreckengehäuse 16 nach radial außen begrenzt.

Der von einer Brennkraftmaschine ausgestoßene Abgasstrom A strömt in einem stromaufwärtigen Mischstrecken-Einströmbereich 24 auf die Mischstrecke 12 bzw. den Kern-Strömungskanal 18 und den Mantel-Strömungskanal 22 zu. Ein Teil des Abgasstroms A tritt als erster Abgas-Teilstrom T₁ in den Kern-Strömungskanal 18 ein und strömt im Wesentlichen in Richtung der Mischstrecken-Längsachse L entlang des inneren Mischstreckengehäuses 14 durch den Kern-Strömungskanal 18. Der verbleibende Teil des Abgasstroms A tritt als zweiter Abgas-Teilstrom T₂ in den Mantel-Strömungskanal 22 ein und strömt entlang des inneren Mischstreckengehäuses 14 bzw. des äußeren Mischstreckengehäuses 16 entlang des Mantel-Strömungskanals 22. In einem stromabwärtigen Mischstrecken-Ausströmbereich 26 können die beiden Abgas-Teilströme T₁ und T₂ wieder zusammengeführt werden und in Richtung auf eine stromabwärts der Mischstrecke 12 angeordnete Abgasbehandlungseinheit, beispielsweise SCR-Katalysator oder dergleichen, zu strömen.

Die Mischstrecke 12 umfasst ferner eine allgemein mit 28 bezeichnete Reaktionsmittelabgabeanordnung. Die Reaktionsmittelabgabeanordnung 28 umfasst einen Injektor 30, welcher ein diesem in flüssiger Form zugeführtes Reaktionsmittel, beispielsweise eine Harnstoff/Wasser-Lösung, in Form eines Sprühkegels 32 in einer im Wesentlichen in Richtung der Mischstrecken-Längsachse L orientierten Reaktionsmittel-Hauptabgaberichtung H abgibt. Dem Injektor 30 ist ein Mischer 34 nachgeschaltet, welcher beispielsweise mit einer kegelstumpfartig ausgebildeten und in der Reaktionsmittel-Hauptabgaberichtung H radial sich erweiternden Wandung ausgebildet sein kann und somit ein Mischvolumen umgrenzt, in welches einerseits das vom Injektor 30 in Form des Sprühkegels 32 abgegebene Reaktionsmittel eingeleitet wird, und in welches auch ein Teil des ersten Abgas-Teilstroms T₁ durch in der Wandung des Mischers 34 gebildete Öffnungen eintritt. Dieser Teil des ersten Abgas-Teilstroms T₁ strömt zusammen mit dem vom Injektor 30 abgegebenen Reaktionsmittel in den Kern-Strömungskanal 18 ein. Der verbleibende Teil des ersten Abgas-Teilstroms T₁ strömt entlang der Außenseite des Mischers 34 durch einen zwischen dem Mischer 34 und dem Inneren Mischstreckengehäuse 14 gebildeten, spaltartigen Zwischenraum 36 in den Kern-Strömungskanal 18.

Man erkennt, dass bei dieser Anordnung der Reaktionsmittelabgabeanordnung 28 das vom Injektor 30 abgegebene Reaktionsmittel im Wesentlichen vollständig bzw. ausschließlich zusammen mit dem ersten Abgas-Teilstrom T₁ in den Kern-Strömungskanal 18 eingeleitet wird. Somit wird verhindert, dass Reaktionsmittel in den Mantel-Strömungskanal 22 gelangt und dort Ablagerungen bildet. Dabei ist zu berücksichtigen, dass eine wesentliche Funktion des Mantel-Strömungskanals 22 die thermische Abschirmung des Kern-Strömungskanals 18 zur Umgebung hin ist und daher insbesondere das äußere Mischstreckengehäuse 16 eine vergleichsweise niedrige Temperatur aufweisen kann, welche das Kondensieren von Reaktionsmittel und damit das Entstehen von Ablagerungen unterstützen könnte.

Es ist darauf hinzuweisen, dass beispielsweise die Reaktionsmittelabgabeanordnung 28 auch derart angeordnet sein könnte, dass der Mischer 34 in den Kern-Strömungskanal 18 eingreifend positioniert ist oder/und dass zwischen dem stromabwärtigen Ende des Mischers 34 und dem inneren Mischstreckengehäuse 14 kein spaltartiger Zwischenraum gebildet ist, so dass der gesamte erste Abgas-Teilstrom T₁ durch den Mischer 34 hindurch in den Kern-Strömungskanal 18 eingeleitet wird.

Im Mantel-Strömungskanal 22 ist ein in Fig. 1 prinzipartig dargestelltes Strömungsverdämmungselement 38 angeordnet. Das Strömungsverdämmungselement 38 ist so positioniert, dass es an einer Außenseite 40 des inneren Mischstreckengehäuses 14 anliegt bzw. gehalten ist, und dass zwischen dem Strömungsverdämmungselement 38 und einer Innenseite 42 des äußeren Mischstreckengehäuses 16 ein Durchströmbereich 44 gebildet ist. In dem Durchströmbereich 44 ist der Strömungsquerschnitt des Mantel-Strömungskanals 22 bezüglich eines Strömungsquerschnitts desselben stromaufwärts des Strömungsverdämmungselements 38 und bezüglich eines Strömungsquerschnitts desselben stromabwärts des Strömungsverdämmungselements 38 verringert.

In Fig. 2 ist das an der Außenseite 40 des inneren Mischstreckengehäuses 14 vorgesehene Strömungsverdämmungselement 38 deutlicher erkennbar. Das Strömungsverdämmungselement 38 ist als Strömungsverdämmungsring 46 ausgebildet. Der Strömungsverdämmungsring 46 umgibt die Mischstrecken-Längsachse L bzw. das innere Mischstreckengehäuse 14 in Umfangsrichtung im Wesentlichen vollständig bzw. unterbrechungsfrei und weist einen Ringkörper 48 mit im Wesentlichen L-förmigem Querschnitt auf. Ein erster L-Schenkel 50 des Ringkörper 48 erstreckt sich im Wesentlichen in Richtung der Mischstrecken-Längsachse L und liegt an der Außenseite 40 des inneren Mischstreckengehäuses 14 an. Ein zweiter L-Schenkel 52 des Ringkörpers 48 erstreckt sich vom ersten L-Schenkel 50 nach radial außen und begrenzt somit zusammen mit dem äußeren Mischstreckengehäuse 16 den in Fig. 1 erkennbaren Durchströmbereich 44. Aufgrund der ringartigen Struktur des Strömungsverdämmungselements 38 weist auch der Durchströmbereich 44 eine die Mischstrecken-Längsachse L umgebende ringförmige Struktur auf.

Durch das Anordnen des Strömungsverdämmungselements 38 im Mantel-Strömungskanal 22 und die dadurch generierte Einschnürung des Strömungsquerschnitts in einem lokalen Bereich wird der Strömungswiderstand des Mantel-Strömungskanals 22 erhöht. Diese Erhöhung des Strömungswiderstands hängt im Wesentlichen ab von dem Ausmaß der radialen Erstreckung des zweiten L-Schenkels 52 und der dadurch auch definierten Strömungsquerschnittsfläche im Durchströmbereich 44. Somit wird es möglich, durch die Auswahl der Dimensionierung bzw. der Formgebung des Strömungsverdämmungselements 38 den Strömungswiderstand im Mantel-Strömungskanal 22 und somit den durch den Mantel-Strömungskanal 22 hindurchströmenden Anteil des gesamten Abgasstroms A, also den zweiten Abgas-Teilstrom T₂, und damit auch das Verhältnis der jeweiligen Massenströme durch den Kern-Strömungskanal 18 und den Mantel-Strömungskanal 22 hindurch einzustellen. Somit kann lediglich durch die Auswahl der Formgebung bzw. Dimensionierung des Strömungsverdämmungselements 38 ein wesentlicher Einfluss auf die Aufteilung der Abgas-Teilströme T₁, T₂ genommen werden und die Mischstrecke 12 an verschiedene Einsatzumgebungen, also beispielsweise den Einsatz in Verbindung mit verschieden gestalteten bzw. dimensionierten Brennkraftmaschinen, angepasst werden, ohne dass es dafür erforderlich ist, an den die Strömungskanäle begrenzenden Komponenten, also beispielsweise dem inneren Mischstreckengehäuse 14 oder dem äußeren Mischstreckengehäuse 16, bauliche Änderungen vorzunehmen. Dies ermöglicht es, die Mischstrecke 12 für eine Vielzahl von Einsatzzwecken mit einer Grundstruktur insbesondere des inneren Mischstreckengehäuses 14 und des äußeren Mischstreckengehäuses 16 bereitzustellen und die Anpassung an verschiedene Einsatzumgebungen durch das Einfügen verschieden gestalteter Strömungsverdämmungselemente 38 zu realisieren.

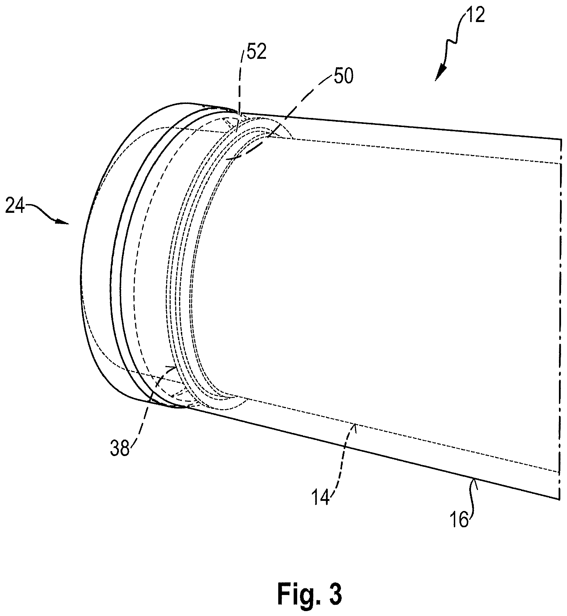

Obgleich die in den Fig. 2 und 3 auch erkennbare Positionierung des Strömungsverdämmungselements 38 an der Außenseite 40 des inneren Mischfeldgehäuses 14 besonders vorteilhaft ist, da dann über das Strömungsverdämmungselement 38 eingeführte thermische Verluste in Richtung zum äußeren Mischstreckengehäuse 16 vermieden werden können, zeigt die Fig. 1 anhand einer mit Strichlinie dargestellten alternativen Positionierung des Strömungsverdämmungselements 38', dass dieses grundsätzlich auch an dem äußeren Mischstreckengehäuse 16 vorgesehen sein könnte, so dass der Durchströmbereich 44' zwischen dem Strömungsverdämmungselement 38' und der Außenseite des inneren Mischstreckengehäuses 14 gebildet ist. Dabei könnte der erste L-Schenkel des als Strömungsverdämmungsring bereitgestellten Strömungsverdämmungselements 38 an der Innenseite 42 des äußeren Mischstreckengehäuses 16 anliegend positioniert sein, beispielsweise auch so wie bei der in Fig. 2 dargestellten Ausgestaltungsform derart, dass der erste L-Schenkel sich, ausgehend vom zweiten L-Schenkel, in Richtung stromabwärts erstreckt.

Erfindungsgemäß sind im Mantel-Strömungskanal 22 in Strömungsrichtung aufeinanderfolgend mehrere Strömungsverdämmungselemente vorgesehen, wobei abwechselnd ein Strömungsverdämmungselement 38 am inneren Mischstreckengehäuse 14 angeordnet ist und ein Strömungsverdämmungselement 38' am äußeren Mischstreckengehäuse 16 vorgesehen ist, so dass ein im oberen Teil der Fig. 2 durch einen Strömungspfeil angedeuteter mäanderartiger und zu einem weiter erhöhten Strömungswiderstand führender Strömungsweg für den zweiten Abgas-Teilstrom T₂ vorgegeben wird. Hierzu können die in Richtung der Mischstrecken-Längsachse L aufeinanderfolgend und alternierend am inneren Mischstreckengehäuse 14 und am äußeren Mischstreckengehäuse 16 angeordneten Strömungsverdämmungselemente 38, 38' in radialer Richtung, also im Bereich ihrer jeweiligen zweiten L-Schenkel, derart dimensioniert sein, dass diese sich in radialer Richtung überlappen.

Für eine stabile Anbindung kann das Strömungsverdämmungselement 38 mit einem dieses jeweils tragenden Mischstreckengehäuse 14 bzw. 16 durch Materialschluss, beispielsweise durch Verschweißen, fest verbunden werden. Dabei kann beispielsweise der erste L-Schenkel in seinem stromabwärtigen Endbereich oder/und seinem stromaufwärtigen Endbereich durch eine beispielsweise umlaufende Schweißnaht oder durch einzelne Schweißpunkte am jeweiligen Mischstreckengehäuse 14 bzw. 16 festgelegt werden. Alternativ oder zusätzlich kann eine stabile Anbindung auch durch Kraftschluss, also durch Reibschluss erzeugt werden, indem das Strömungsverdämmungselement 38 mit seinem Ringkörper 48 axial auf bzw. in das diesen jeweils tragende Mischstreckengehäuse 14 bzw. 16 gepresst wird.

Insbesondere in den Fig. 1 und 3 ist zu erkennen, dass das Strömungsverdämmungselement 38 nahe dem stromaufwärtigen Mischstrecken-Einströmbereich 24 positioniert ist. Dies kann beispielsweise dadurch erreicht werden, dass der zwischen dem stromaufwärtigen Einströmbereich 24 und dem Strömungsverdämmungselement 38 liegende Längenabschnitt des Mantelströmungskanals 22 weniger als die Hälfte, vorzugsweise weniger als 20% der gesamten Länge des Mantelströmungskanals 22 in Richtung der Mischstrecken-Längsachse L beträgt. Dadurch wird ein Strömungsstau bzw. ein Strömungstotraum im Mantelströmungskanal 22 im Wesentlichen vermieden, so dass eine gleichmäßige Durchströmung desselben und insbesondere auch eine durch den zweiten Abgas-Teilstrom T₂ zuverlässig eingeführte thermische Abschirmung des Kern-Strömungskanals 18 gewährleistet ist.

Es ist darauf hinzuweisen, dass das als separates Bauteil im Mantel-Strömungskanal 22 bzw. allgemein einen parallel zum Kern-Strömungskanal 18 geführten Bypass-Strömungskanal 20 bereitgestellte Strömungsverdämmungselement 38 auch mit anderer geometrischer Ausgestaltung bereitgestellt sein könnte. So müssen nicht notwendigerweise die beiden L-Schenkel 50, 52 die in Fig. 2 erkennbare, im Wesentlichen orthogonale Orientierung zueinander aufweisen. Der zwischen diesen eingeschlossene Winkel kann beispielsweise auch größer oder kleiner als 90° sein. Ferner kann die radiale Erstreckungslänge des im Wesentlichen zur Einschnürung des Strömungsquerschnitts beitragenden zweiten L-Schenkels 52 über den Umfang um die Mischstrecken-Längsachse L variieren, um somit eine über den Umfang variierende Verdämmungswirkung zu erzeugen. Auch könnte das Strömungsverdämmungselement 38 in Umfangsrichtung unterbrochen sein oder durch mehrere in Umfangsrichtung aufeinander folgend angeordnete, beispielsweise auch in Richtung der Mischstrecken-Längsachse L versetzt zueinander angeordnete Teile bereitgestellt sein.

## Patentansprüche

1. Mischbaugruppe für eine Abgasanlage einer Brennkraftmaschine zum Mischen von von einer Brennkraftmaschine abgegebenem Abgas mit Reaktionsmittel, umfassend eine in Richtung einer Mischstrecken-Längsachse (L) sich erstreckende Mischstrecke (12) mit einem stromaufwärtigen Mischstrecken-Einströmbereich (24) zur Aufnahme von Abgas und/oder Reaktionsmittel in der Mischstrecke (12), wobei die Mischstrecke einen von einem ersten Abgas-Teilstrom (T₁) durchströmbaren Kern-Strömungskanal (18) und einen von einem zweiten Abgas-Teilstrom (T₂) durchströmbaren Bypass-Strömungskanal (20) umfasst, wobei in dem Bypass-Strömungskanal (20) wenigstens ein einen Strömungsquerschnitt des Bypass-Strömungskanals (20) verringerndes Strömungsverdämmungselement (38, 38') angeordnet ist, wobei der Bypass-Strömungskanal (20) einen den Kern-Strömungskanal (18) ringartig umgebenden Mantel-Strömungskanal (22) umfasst und wenigstens ein Strömungsverdämmungselement (38, 38') einen in dem Mantel-Strömungskanal (22) angeordneten Strömungsverdämmungsring (46) umfasst, wobei die Mischstrecke (12) ein den Mantel-Strömungskanal (22) nach radial außen begrenzendes äußeres Mischstreckengehäuse (16) und ein den Kern-Strömungskanal (18) nach radial außen begrenzendes und von dem Mantel-Strömungskanal (22) trennendes inneres Mischstreckengehäuse (14) umfasst,
wobei wenigstens ein Strömungsverdämmungselement (38') an einer dem Mantel-Strömungskanal (22) zugewandten Innenseite (42) des äußeren Mischstreckengehäuses (16) festgelegt ist, so dass zwischen dem Strömungsverdämmungselement (38') und einer dem Mantel-Strömungskanal (22) zugewandten Außenseite (40) des inneren Mischstreckengehäuses (14) ein Durchströmbereich (44') mit bezüglich eines Strömungsquerschnitts des Mantel-Strömungskanals (22) stromaufwärts des wenigstens einen Strömungsverdämmungselements (38') und bezüglich eines Strömungsquerschnitts des Mantel-Strömungskanals (22) stromabwärts des wenigstens einen Strömungsverdämmungselements (38') verringertem Strömungsquerschnitt gebildet ist,
**dadurch gekennzeichnet,**
- **dass** wenigstens ein Strömungsverdämmungselement (38) an der dem Mantel-Strömungskanal (22) zugewandten Außenseite (40) des inneren Mischstreckengehäuses (14) festgelegt ist, so dass zwischen dem Strömungsverdämmungselement (38) und der dem Mantel-Strömungskanal (22) zugewandten Innenseite (42) des äußeren Mischstreckengehäuses (16) ein Durchströmbereich (44) mit bezüglich des Strömungsquerschnitts des Mantel-Strömungskanals (22) stromaufwärts des wenigstens einen Strömungsverdämmungselements (38) und bezüglich des Strömungsquerschnitts des Mantel-Strömungskanals (22) stromabwärts des wenigstens einen Strömungsverdämmungselements (38) verringertem Strömungsquerschnitt gebildet ist, und
- **dass** wenigstens zwei Strömungsverdämmungselemente (38, 38') in Richtung der Mischstrecken-Längsachse (L) aufeinander folgend alternierend am inneren Mischstreckengehäuse (14) und am äußeren Mischstreckengehäuse (16) festgelegt sind.

2. Mischbaugruppe nach Anspruch 1, **dadurch gekennzeichnet, dass** der Strömungsverdämmungsring (46) die Mischstrecken-Längsachse (L) vollständig umgibt.

3. Mischbaugruppe nach Anspruch 1 oder 2, **dadurch gekennzeichnet, dass** der Strömungsverdämmungsring (46) einen Ringkörper (48) mit L-förmigem Querschnittsprofil aufweist, wobei ein erster L-Schenkel des Ringkörpers an der Innenseite (42) des äußeren Mischstreckengehäuses (16) festgelegt ist und ein vom ersten L-Schenkel sich weg erstreckender zweiter L-Schenkel radial in den Mantel-Strömungskanal (22) hervorsteht und mit dem inneren Mischstreckengehäuse (14) den Durchströmbereich (44') begrenzt, oder wobei der erste L-Schenkel (50) des Ringkörpers (48) an der Außenseite (40) des inneren Mischstreckengehäuses (14) festgelegt ist und der vom ersten L-Schenkel (50) sich weg erstreckende zweite L-Schenkel (52) radial in den Mantel-Strömungskanal (22) hervorsteht und mit dem äußeren Mischstreckengehäuse (16) den Durchströmbereich (44) begrenzt.

4. Mischbaugruppe nach Anspruch 3, **dadurch gekennzeichnet, dass** der Ringkörper mit seinem ersten L-Schenkel (50) an dem äußeren Mischstreckengehäuse (16) oder dem inneren Mischstreckengehäuse (14) durch Kraftschluss oder/und Materialschluss, vorzugsweise Verschweißen, festgelegt ist.

5. Mischbaugruppe nach einem der Ansprüche 1-4, **dadurch gekennzeichnet, dass** wenigstens ein am inneren Mischstreckengehäuse (14) festgelegtes Strömungsverdämmungselement (38) und wenigstens ein am äußeren Mischstreckengehäuse (16) festgelegtes Strömungsverdämmungselement (38') einander radial überlappen.

6. Mischbaugruppe nach einem der vorangehenden Ansprüche, **dadurch gekennzeichnet, dass** wenigstens ein Strömungsverdämmungselement (38, 38') im Bereich des Mischstrecken-Einströmbereichs (24) angeordnet ist.

7. Mischbaugruppe nach einem der vorangehenden Ansprüche, **dadurch gekennzeichnet, dass** eine Reaktionsmittelabgabeanordnung (28) zur Abgabe von Reaktionsmittel in die Mischstrecke (12) vorgesehen ist.

8. Mischbaugruppe nach Anspruch 7, **dadurch gekennzeichnet, dass** die Reaktionsmittelabgabeanordnung (28) einen vorzugsweise sich in Richtung einer Reaktionsmittel-Hauptabgaberichtung (H) radial erweiternden Mischer (34) umfasst.

9. Mischbaugruppe nach Anspruch 7 oder 8, **dadurch gekennzeichnet, dass** Reaktionsmittelabgabeanordnung (28) zur Abgabe von Reaktionsmittel im Wesentlichen nur in den ersten Abgas-Teilstrom (T₁) ausgebildet ist.

10. Abgasanlage, umfassend eine Mischbaugruppe nach einem der vorangehenden Ansprüche.

## Claims

1. A mixing subassembly for an exhaust gas system of an internal combustion engine for mixing exhaust gas which is discharged by an internal combustion engine with reactant, comprising a mixing path (12) which extends in the direction of a mixing path longitudinal axis (L) with an upstream mixing path inflow region (24) for receiving exhaust gas and/or reactant in the mixing path (12), wherein the mixing path comprises a core flow channel (18), through which a first exhaust gas partial flow (T₁) flows, and a bypass flow channel (20), through which a second exhaust gas partial flow (T₂) flows, wherein at least one flow blocking element (38, 38') which reduces a flow cross section of the bypass flow channel (20) is arranged in the bypass flow channel (20), wherein the bypass flow channel (20) comprises a covering flow channel (22) which annularly surrounds the core flow channel (18) and wherein at least one flow blocking element (38, 38') comprises a flow blocking ring (46) which is arranged in the covering flow channel (22), wherein the mixing path (12) comprises an external mixing path housing (16) which delimits the covering flow channel (22) in a radially outward manner and separates it from the covering flow channel (22) and an internal mixing path housing (14) which delimits the core flow channel (18) in a radially outward manner,
wherein at least one flow blocking element (38') is secured to an inner side (42), which faces the covering flow channel (22), of the external mixing path housing (16) so that, between the flow blocking element (38') and an outer side (40), which faces the covering flow channel (22), of the internal mixing path housing (14), there is formed a throughflow region (44') with a flow cross section which is reduced with respect to a flow cross section of the covering flow channel (22) upstream of the at least one flow blocking element (38') and with respect to a flow cross section of the covering flow channel (22) downstream of the at least one flow blocking element (38'),
**characterized in that**
- at least one flow blocking element (38) is secured to the outer side (40), which faces the covering flow channel (22), of the internal mixing path housing (14) so that between the flow blocking element (38) and the inner side (42), which faces the covering flow channel (22), of the external mixing path housing (16), there is formed a throughflow region (44) with a flow cross section which is reduced with respect to the flow cross section of the covering flow channel (22) upstream of the at least one flow blocking element (38) and with respect to the flow cross section of the covering flow channel (22) downstream of the at least one flow blocking element (38), and
- at least two flow blocking elements (38, 38') are secured alternately to the internal mixing path housing (14) and the external mixing path housing (16) in a successive manner in the direction of the mixing path longitudinal axis (L).

2. The mixing subassembly as claimed in claim 1, **characterized in that** the flow blocking ring (46) completely surrounds the mixing path longitudinal axis (L).

3. The mixing subassembly as claimed in claim 1 or 2, **characterized in that** the flow blocking ring (46) has an annular member (48) with an L-shaped cross sectional profile, wherein a first L-shaped leg of the annular member is secured to the inner side (42) of the external mixing path housing (16) and a second L-shaped leg which extends away from the first L-shaped leg protrudes radially into the covering flow channel (22) and delimits the throughflow region (44') with the internal mixing path housing (14), or wherein the first L-shaped leg (50) of the annular member (48) is secured to the outer side (40) of the internal mixing path housing (14) and the second L-shaped leg (52) which extends away from the first L-shaped leg (50) protrudes radially into the covering flow channel (22) and delimits the throughflow region (44) with the external mixing path housing (16).

4. The mixing subassembly as claimed in claim 3, **characterized in that** the annular member is secured with the first L-shaped leg (50) thereof to the external mixing path housing (16) or the internal mixing path housing (14) by a non-positive-locking connection and/or materially engaging connection, preferably welding.

5. The mixing subassembly as claimed in one of claims 1-4, **characterized in that** at least one flow blocking element (38) which is secured to the internal mixing path housing (14) and at least one flow blocking element (38') which is secured to the external mixing path housing (16) overlap each other radially.

6. The mixing subassembly as claimed in one of the preceding claims, **characterized in that** at least one flow blocking element (38, 38') is arranged in the region of the mixing path inflow region (24).

7. The mixing subassembly as claimed in one of the preceding claims, **characterized in that**, in order to discharge reactant into the mixing path (12), a reactant discharge arrangement (28) is provided.

8. The mixing subassembly as claimed in claim 7, **characterized in that** the reactant discharge arrangement (28) comprises a mixer (34) which preferably expands radially in the direction of a reactant main discharge direction (H).

9. The mixing subassembly as claimed in claim 7 or 8, **characterized in that** a reactant discharge arrangement (28) is constructed in order to discharge reactant substantially only into the first exhaust gas partial flow (T₁).

10. An exhaust gas system comprising a mixing subassembly as claimed in one of the preceding claims.

## Revendications

1. Un sous-ensemble de mélange pour un système de gaz d'échappement d'un moteur à combustion interne pour mélanger les gaz d'échappement rejetés par un moteur à combustion interne avec un réactif, comprenant une voie de mélange (12) qui s'étend dans la direction d'un axe longitudinal de la voie de mélange (L) avec une région d'entrée de voie de mélange en amont (24) pour recevoir les gaz d'échappement et/ou le réactif dans la voie de mélange (12), dans lequel la voie de mélange comprend un canal d'écoulement central (18), à travers lequel s'écoule un premier flux partiel de gaz d'échappement (T₁), et un canal d'écoulement de dérivation (20), à travers lequel s'écoule un deuxième flux partiel de gaz d'échappement (T₂), dans lequel au moins un élément de blocage d'écoulement (38, 38') qui réduit une section d'écoulement du canal de dérivation (20) est disposé dans le canal de dérivation (20), dans lequel le canal de dérivation (20) comprend un canal d'écoulement de couverture (22) qui entoure annulairement le canal d'écoulement central (18) et dans lequel au moins un élément de blocage d'écoulement (38, 38') comprend un anneau de blocage d'écoulement (46) qui est disposé dans le canal d'écoulement de couverture (22), dans lequel la voie de mélange (12) comprend un boîtier de la voie de mélange externe (16) qui délimite le canal d'écoulement de couverture (22) de manière radiale vers l'extérieur et un boîtier de voie de mélange interne (14) qui délimite le canal d'écoulement central (18) de manière radiale vers l'extérieur et le sépare du canal d'écoulement de couverture (22), dans lequel au moins un élément de blocage d'écoulement (38') est fixé à un côté intérieur (42), qui fait face au canal d'écoulement de couverture (22), du boîtier de la voie de mélange externe (16) de sorte que, entre l'élément de blocage d'écoulement (38') et un côté extérieur (40), qui fait face au canal d'écoulement de couverture (22), du boîtier de la voie de mélange interne (14), une zone de passage (44') est formée dont la section d'écoulement est réduite par rapport à la section d'écoulement du canal d'écoulement de couverture (22) en amont dudit au moins un élément de blocage d'écoulement (38') et par rapport à la section d'écoulement du canal d'écoulement de couverture (22) en aval dudit au moins un élément de blocage d'écoulement (38'),
**caractérisé en ce que**
- au moins un élément de blocage d'écoulement (38) est fixé sur le côté extérieur (40), qui fait face au canal d'écoulement de couverture (22), du boîtier de la voie de mélange interne (14) de sorte qu'entre l'élément de blocage d'écoulement (38) et le côté intérieur (42), qui fait face au canal d'écoulement de couverture (22), du boîtier de la voie de mélange externe (16), une zone de passage (44) est formée avec une section d'écoulement réduite par rapport à la section d'écoulement du canal d'écoulement de couverture (22) en amont dudit au moins un élément de blocage d'écoulement (38) et par rapport à la section d'écoulement du canal d'écoulement de couverture (22) en aval dudit au moins un élément de blocage d'écoulement (38), et
- au moins deux éléments de blocage d'écoulement (38, 38') sont fixés alternativement au boîtier de la voie de mélange interne (14) et au boîtier de la voie de mélange externe (16) de manière successive dans la direction de l'axe longitudinal de la voie de mélange (L).

2. Le sous-ensemble de mélange selon la revendication 1, **caractérisé en ce que** l'anneau de blocage d'écoulement (46) entoure complètement l'axe longitudinal de la voie de mélange (L).

3. Le sous-ensemble de mélange selon la revendication 1 ou 2, **caractérisé en ce que** l'anneau de blocage d'écoulement (46) a un élément annulaire (48) avec un profil de section transversale en forme de L, dans lequel une première jambe en forme de L de l'élément annulaire est fixée au côté intérieur (42) du boîtier de la voie de mélange externe (16) et une deuxième jambe en forme de L qui s'étend à l'écart de la première jambe en forme de L fait saillie radialement dans le canal d'écoulement de couverture (22) et délimite la zone de passage (44') avec le boîtier de la voie de mélange interne (14), ou dans lequel la première branche en L (50) de l'élément annulaire (48) est fixée au côté extérieur (40) du boîtier de la voie de mélange interne (14) et la deuxième branche en L (52) qui s'étend à l'écart de la première branche en L (50) fait saillie radialement dans le canal d'écoulement de couverture (22) et délimite la zone de passage (44) avec le boîtier de la voie de mélange externe (16).

4. Le sous-ensemble de mélange selon la revendication 3, **caractérisé en ce que** l'élément annulaire est fixé avec sa première branche en forme de L (50) au boîtier de la voie de mélange externe (16) ou au boîtier de la voie de mélange interne (14) par une connexion à verrouillage non positif et/ou une connexion matériellement engageante, de préférence par soudage.

5. Le sous-ensemble de mélange selon l'une des revendications 1 à 4, **caractérisé en ce qu'**au moins un élément de blocage d'écoulement (38) fixé au boîtier de la voie de mélange interne (14) et au moins un élément de blocage d'écoulement (38') fixé au boîtier de la voie de mélange externe (16) se chevauchent dans le sens radial.

6. Le sous-ensemble de mélange selon l'une des revendications précédentes, **caractérisé en ce qu'**au moins un élément de blocage d'écoulement (38, 38') est disposé dans la région de la zone d'entrée de la voie de mélange (24).

7. Le sous-ensemble de mélange selon l'une des revendications précédentes, **caractérisé en ce que**, pour décharger le réactif dans la voie de mélange (12), un dispositif d'évacuation du réactif (28) est prévu.

8. Le sous-ensemble de mélange selon la revendication 7, **caractérisé en ce que** le dispositif d'évacuation du réactif (28) comprend un mélangeur (34) qui s'étend de préférence radialement dans la direction d'une direction principale d'évacuation du réactif (H).

9. Le sous-ensemble de mélange selon la revendication 7 ou 8, **caractérisé en ce que** le dispositif d'évacuation du réactif (28) est construit de manière à évacuer le réactif pratiquement uniquement dans le premier flux partiel de gaz d'échappement (T₁).

10. Un système de gaz d'échappement comprenant un sous-ensemble de mélange selon l'une des revendications précédentes.
